# EUROPEAN PATENT APPLICATION

(11) **EP 4 375 606 A1**
(43) Date of publication of application: **29.05.2024**
(21) Application number: 22846332.9
(22) Date of filing: 08.06.2022
(51) Int. Cl.: F28D 11/02, F28F 17/00

(54) **SELF-DEFROSTING HEAT EXCHANGER AND METHOD OF USING SAME**

(30) Priority: 20.07.2021 RU 2021121518
(71) Applicant: Moroz, Maksim Nikolaevich, Novosibirsk, 630055 (RU); Savin, Pavel Alekseevich, Novosibirsk 630090 (RU)
(72) Inventor: FEDOROV, Vladimir Vladimirovich, Novosibirsk 630060 (RU)
(74) Representative: Osmans, Voldemars
(86) International application number: PCT/RU2022/050179
(87) International publication number: WO 2023/003496

(57) **Abstract**

The self-defrosting heat exchangers and their application technique are the subject of the current invention. The heat exchanger includes a rotor placed in a housing. The rotor is made up of ring elements with gaps that are sealed to form channels that separate the supply and exhaust air. The body consists of an outer and an inner cylinder. The outer cylinder encloses the rotor and contains at least one opening for introducing exhaust air and at least one opening for exhausting supply air.

## Description

### Technical Field

The self-defrosting heat exchangers and their application technique are the subject of the current invention. The proposed heat exchanger has high efficiency and remains operational at almost any climatic level of negative temperatures and any indoor humidity. The heat exchanger is intended for use in supply and exhaust ventilation systems and does not mix exhaust and supply air.

### Background art

The invention relates to the field of supply and exhaust ventilation systems for premises. A heat exchanger is proposed for such systems, in which the heated air removed from the room transfers the majority of its heat to the cold supply air entering from the street, allowing for savings on heating.

Regenerative and recuperative heat exchangers are the two types of heat exchangers used for such tasks. In recuperative heat exchangers, heat exchange between gases occurs continuously, either directly through the wall separating them or via an intermediate heat carrier. Heat exchange in regenerative heat exchangers occurs through the alternating contact of gases of varying temperatures from indoor and outdoor sources with the same heat exchanger surfaces.

The most common heat exchangers for use in supply and exhaust ventilation of premises are plate, with intermediate heat carrier, rotor and chamber. Plate heat exchangers with an intermediate heat carrier are classified as recuperative, whereas rotary and chamber heat exchangers are classified as regenerative.

The disadvantage of all existing heat exchangers is that they are limited, to varying degrees, in terms of outside temperature parameters when operated during the winter. The exhaust air is cooled as it moves through the heat exchanger, and condensation forms if the temperature falls below the dew point. In the case of negative supply air temperatures, condensate formed while cooling the exhaust air turns into ice. This causes the heat exchangers to freeze and shut off. On existing heat exchangers, this problem is solved in a variety of ways, including heating the external and/or exhaust air or changing their flow rate ratio. All of these methods reduce the efficiency of these systems, complicate them, and, as a result, raise the costs of both the supply and exhaust systems, as well as operating costs. The lower the outside temperatures and the higher the indoor humidity, the more complex systems are used to protect them from freezing. In this case, the overall efficiency of the system is significantly reduced, resulting in the loss of economic feasibility for their use. Another disadvantage of regenerative heat exchangers is the partial mixing of supply and exhaust air, which is unacceptable in some cases.

In the article by Vishnevsky E. P. Recuperative plate heat exchangers in harsh climatic conditions (Plumbing, heating, air conditioning. - 2011. - No. 6. - P. 56-61.) describes the methods used to defrost heat exchangers. The first method described is to turn off the inflow once the heat exchanger has reached a certain level of freezing. As a result, only the warm exhaust air from the exhaust side passes through the heat exchanger, causing it to defrost. The first disadvantage of the described method is the need to monitor freezing and turn off the inflow whenever it reaches a critical level of freezing. This makes the method more labor-intensive. The second disadvantage is that while the supply air is turned off, fresh air does not enter the room in an organized manner, but through cracks and other leaks. This causes overcooling of leaky partitions and subsequent freezing, which can even result in partial destruction (sprinkling of thermal insulation, peeling of coatings, etc.).

Also in the article by Vishnevsky E. P. Recuperative plate heat exchangers in harsh climatic conditions (Plumbing, heating, air conditioning. - 2011. - No. 6. - P. 56-61.) describes a method for partially defrosting the heat exchanger. This method assumes the presence of multi-leaf, individually controlled air valves at the inlet on the inflow side. During normal operation the valves are fully open. As the heat exchanger freezes, the valve petals are controlled, temporarily blocking specific parts of the inlet air flow. This allows for sequential defrosting of each section. The article itself mentions the first of the disadvantages of the proposed method. It lies in the fact that the control system is much more complex. Consequently, the system also becomes more expensive and bulky. The second disadvantage of this method is that it involves only partial defrosting of the heat exchanger. In this regard, part of the heat exchanger functions poorly until completely defrosted, and in sections that are defrosting, the heat of the exhaust air is used ineffectively, resulting in a decrease in the heat exchanger's total efficiency.

Another method described in the article by Vishnevsky E. P. Plate heat exchangers of the recuperative type in harsh climatic conditions (Plumbing, heating, air conditioning. - 2011. - No. 6. - P. 56-61.), ensures the prevention of icing of the heat exchanger. It is proposed to solve this problem by preheating the supply air above the freezing temperature. This can be achieved through partial mixing of fresh and exhaust air in the supply air, or by using additional electric heaters (heating elements) or air heaters. The disadvantage of the first method is that a significant portion of the exhaust air is returned into the room, thereby depriving the room of ventilation. The disadvantage of the second method is a significant increase in energy consumption for constant heating of the supply air.

Article by Savelyev Yu. L. Efficiency and reliability of rotary heat exchangers in ventilation systems (Academic Bulletin of UralNIIproekt RAASN. - 2014. - No. 1.) is devoted to assessing the operation of a rotary heat exchanger under conditions of heat regeneration of moist air. A hypothetical model of the heat exchange process between the rotor mass and air has been compiled. A study of the measures that ensure the operation of a rotary heat exchanger without ice formation was conducted. It has been shown that the most effective method is to reduce rotor speed. Calculated confirmation is provided that in this case, regeneration efficiency and energy savings are reduced. The first disadvantage of the method described in article [2] is that it proposes reducing the number of rotor revolutions along with heating the outside air and/or heating the exhaust air. Heating and/or heating require a large amount of energy, which significantly reduces the method's efficiency.

In the article Kragh J. et al. New counter flow heat exchanger designed for ventilation systems in cold climates (Energy and Buildings. - 2007. - Vol. 39. - No. 11. - P. 1151-1158.) presents the design and test measurements of a new counterflow heat exchanger designed for cold climates. climate. The developed heat exchanger is capable of continuous defrosting without additional heating. Other advantages of the developed heat exchanger are low pressure loss, cheap materials and simple design. In this paper, the efficiency of a new heat exchanger is calculated theoretically and measured experimentally. The experiment shows that the heat exchanger is able to continuously defrost at outdoor temperatures well below freezing point while remaining highly efficient. The first disadvantage of this heat exchanger is mentioned in the article [3]. It is the fact that the heat exchanger is larger than other heat exchangers. Another disadvantage is that the process of defrosting ice requires the use of two heat exchangers. Two electric valves control airflow to two heat exchangers. The exhaust air flow from the room is adjusted so that it passes through the active and passive heat exchangers at 90% and 10%, respectively. The air flows are switched once the set time interval has expired. This significantly increases not only the dimensions of the system, but also its cost. This heat exchanger has also been tested at temperatures as low as -20 °C, which is considered relatively warm for winter. The operation of the heat exchanger at lower temperatures was not discussed.

In the article by Nasr M. R. et al. Evaluation of defrosting methods for air-to-air heat/energy exchangers on energy consumption of ventilation (Applied Energy. - 2015. - T. 151. - P. 32-40.) evaluates the influence of two defrosting methods on ventilation energy consumption in three cold cities (eg Saskatoon, Anchorage and Chicago). The first method is to preheat the outside air, the disadvantages of which have already been described above. And the second way is to bypass the flow of outside air. This is typically achieved by completely shutting off the supply air flow to the heat exchanger while the exhaust air flow continues to flow through the heat exchanger, heating up the core and melting any accumulated frost or ice. After some time, the bypass is turned off, and the heat exchanger returns to normal operation (i.e., heat/energy recovery). During the defrost period, an additional air heater (and humidifier) should be turned on to heat/condition the outside air before it enters the building. The first disadvantage of this method is the additional energy required to heat cold air to a temperature above 0°C. Another disadvantage is that during defrosting the normal heat exchange between incoming and exhaust air is interrupted.

The patent RU2658265C2 (published on June 19, 2018; IPC: F24F 12/00) is a close analogue to the present invention. It describes a heat recuperator with a closed housing and a rotor installed inside it. The rotor's plates alternately find themselves in the warm air exiting the room and the cold air entering it. The rotor's plates are made in a form of disks mounted with a gap between them on a shaft that is oriented horizontally, perpendicular to the horizontal air flow. From time to time, it reverses the direction of movement from the room to the outside area or the outside area to the room. The first disadvantage of this heat exchanger is that it uses two recuperators to defrost ice (for defrosting) -one in the "exhaust" mode and the other in the "pressure" mode-and after a certain amount of time, they switch modes. This significantly increases both the dimensions of the system and its cost. Partial mixing of exhaust and supply air occurs at the moment of switching the direction of flows.

### Summary of invention

The objective of the present invention is to create and develop a heat exchanger and a method of its use that ensures self-defrosting of the heat exchanger, that is, ensuring the melting of formed ice, during its operation in any climatic conditions while maintaining continuous operation and high heat transfer efficiency.

The technical outcome that guarantees high efficiency and defrosting of the heat exchanger without requiring extra energy for heating is what makes this task possible. In the suggested heat exchanger, supply and exhaust air do not mix either. This is achieved, among other things, due to:
slow rotor rotation;
separate channels for supply and exhaust air, with a non-vertical axis of rotation of the rotor;
the location of the exhaust air input and supply air outlet in the lower part of the rotor, relative to its axis of rotation, and the exhaust air outlet and supply air input in the upper part of the rotor, relative to its rotation axis of rotation;

The technical result is achieved by the heat exchanger with a non-vertical axis of rotation placed in a housing. A The rotor is made up of ring elements, with the gaps between them sealed alternately along the inner and outer perimeters, forming channels that separate the supply and exhaust air. The housing consists of an outer and an inner cylinder. The outer cylinder encloses the rotor and has at least one opening in the lower part for adding exhaust air to the rotor and at least one opening in the upper part for removing exhaust air from the rotor. The inner cylinder is inserted into the rotor and has at least one opening in the upper part for adding supply air to the rotor and at least one opening in the lower part for removing supply air from the rotor. Additionally, the inner cylinder has a partition built into it that separates the input and output of supply air. The input and output of supply air are discharged into the inner cylinder through its ends.

Heat exchange between the supply and exhaust air occurs through the walls of the separating channels without mixing these flows. The specified arrangement of openings for the input and output of supply and exhaust air into the rotor provides a generally countercurrent pattern of movement of these flows in the rotor channels, which significantly increases the efficiency of heat exchange between these flows. At the same time, in the case of negative temperatures of the supply air and positive temperatures of the exhaust air, the maximum channel surface temperature will be in the lower sector of the rotor, and the minimum - in the upper sector.

The slow rotation of the rotor causes its sectors to gradually move from the negative temperature zone, where its surfaces freeze on the exhaust air side, to the positive temperature zone, where frozen surfaces thaw and liquid condensate is discharged, and back. Thus, continuous defrosting of the rotor occurs. Too low rotor speed will lead to a significant increase in the thickness of the ice that builds up in the sector with a negative temperature, which significantly worsens the heat exchange between the channels for exhaust and supply air. If the rotor rotation speed is too high, incomplete thawing of the ice in the sector with a positive temperature is possible, and the contribution of the rotor's heat capacity becomes significant, reducing temperature gradients between the rotor walls and air flows and, as a result, reducing heat exchanger efficiency.

The optimal rotor speed depends on the gap in the channels, the surface area of the channels, the flow rate and humidity of the exhaust air. In order of magnitude, this speed is about one revolution per hour and can vary several times in one direction or the other.

Since over a period of about a minute there is no significant change in the thickness of the ice during its freezing and thawing, the rotor 1 rotation can be not only continuous but also with stops, i.e., with a turn at a certain small angle about units of degrees, followed by a stop for less than a minute, as long as the average rotation speed is maintained. The intermittent rotation of the rotor, i.e., with stops, enables the use of mechanisms with a lower reduction coefficient, which are correspondingly cheaper.

Liquid condensate produced by air cooling and/or ice thawing can be discharged by gravity through a pipe in the lower part of the heat exchanger and collected under the influence of gravity.

The annular elements forming the rotor channels can be made entirely or contain inserts made of gas-tight vapor-moisture-permeable material, allowing liquid condensate to be absorbed from the channels where it is formed and evaporated in other channels.

To facilitate the rotation of the rotor, it can be installed with a small gap relative to the housing on rotational units, for example, rolling rollers. Also, making the heat exchanger with gaps between the rotor and the housing significantly reduces the requirements for the manufacturing accuracy of these units, but leads to unwanted flows of exhaust and supply air with the environment. To seal the gaps between the rotor and the housing, sliding seals made of brushes, felt, rubber, and so on can be used.

To reduce heat losses of the heat exchanger and, accordingly, increase its efficiency, the housing and ends of the rotor can be covered with thermal insulation.

Furthermore, the technical result is achieved by using a heat exchanger containing a rotating rotor, through which exhaust air is introduced into the rotor through the heat exchanger opening for introducing exhaust air, supply air is introduced into the rotor through the heat exchanger opening for supply air, and exhaust air is passed through the rotor through channels for exhaust air, then supply air is passed through the rotor through the channels for supply air, exhaust air is discharged from the rotor through the heat exchanger opening to discharge the exhaust air, the supply air is discharged from the rotor through the heat exchanger opening to discharge the supply air. In this case, supply air is introduced and exhaust air is discharged on one side relative to the rotor's axis of rotation, and supply air is discharged and exhaust air is introduced on the other side relative to the rotor's axis of rotation. During operation of the heat exchanger the rotor rotates at a speed that prevents excessive freezing of the rotor in the cold sector of the rotor, complete thawing of ice occurs in the warm sector of the rotor, and at the same time the influence of the rotor's own heat capacity on the heat exchange process between the supply and exhaust air remains insignificant. This ensures self-defrosting of the heat exchanger during its operation, high efficiency and operability in any climatic conditions.

Heat exchange between the supply and exhaust air occurs through the walls separating the channels, without mixing these flows. The indicated points of entry into and exit from the rotor of supply and exhaust air provide a generally countercurrent pattern of movement of these flows in the rotor channels, which significantly increases the efficiency of heat exchange between these flows. In the case of negative supply air temperatures and positive exhaust air temperatures, the maximum surface temperature of the rotor channels will be in the sector of the exhaust air input and, consequently, the supply air outlet, and the minimum in the sector of the exhaust air outlet and the supply air input.

The slow rotation of the rotor causes its sectors to gradually move from the negative temperature zone, where its surfaces freeze on the exhaust air side, to the positive temperature zone, where frozen surfaces thaw and liquid condensate is discharged, and back. Thus, continuous defrosting of the rotor occurs. Too low rotor speed will lead to a significant increase in the thickness of the ice that builds up in the sector with a negative temperature, which significantly worsens the heat exchange between the channels for exhaust and supply air. If the rotor rotation speed is too high, incomplete thawing of the ice in the sector with a positive temperature is possible, and the contribution of the rotor's heat capacity becomes significant, reducing temperature gradients between the rotor walls and air flows and, as a result, reducing heat exchanger efficiency.

The optimal rotor speed depends on the gap in the channels, the surface area of the channels, the flow rate and humidity of the exhaust air. In order of magnitude, this speed is about one revolution per hour and can vary several times in one direction or the other.

Since over a period of about a minute there is no significant change in the thickness of the ice during its freezing and thawing, the rotor 1 rotation can be not only continuous but also with stops, i.e., with a turn at a certain small angle about units of degrees, followed by a stop for less than a minute, as long as the average rotation speed is maintained. The intermittent rotation of the rotor, i.e., with stops, enables the use of mechanisms with a lower reduction coefficient, which are correspondingly cheaper.

Liquid condensate formed as a result of air cooling and/or ice thawing can be discharged by gravity from the bottom of the heat exchanger, where it will be collected under the influence of gravity.

Liquid condensate can be absorbed from the rotor channels, where it is formed, and evaporate in other rotor channels, provided that gas-tight, vapor-moisture-permeable materials are used in the manufacture of these channels.

### Brief description of drawings

Figure 1 shows a cross-section of the heat exchanger.
Figure 2 shows a sectional view of the heat exchanger (side view).
Figure 3 shows a cross-section of the heat exchanger with sliding sealing elements.
Figre 4 shows a circuit diagram illustrating a method of using a heat exchanger.

### Detailed Description

The following detailed description of the invention embodiment provides numerous implementation details intended to provide a clear understanding of the present invention. However, it is obvious to a person skilled in the subject matter how the present invention can be used with or without these implementation details. In other instances, well-known methods, procedures, and components are not described in detail so as not to impede an undue understanding of the features of the present invention.

Moreover, it is obvious from the foregoing disclosure that the invention is not limited to the embodiment shown. Numerous possible modifications, alterations, variations, and substitutions that preserve the substance and form of the present invention are obvious to those skilled in the art.

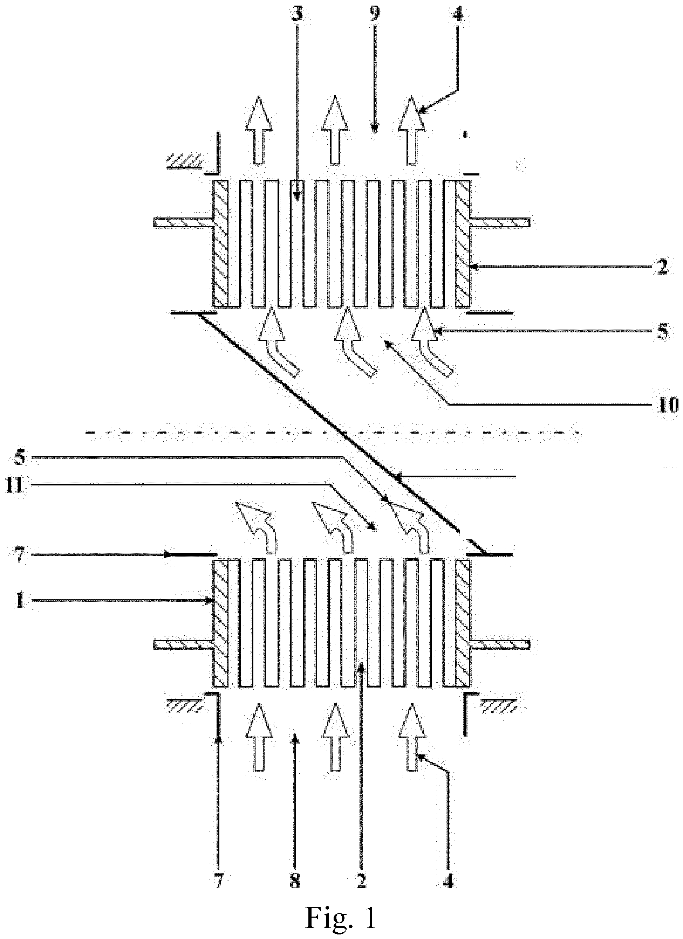

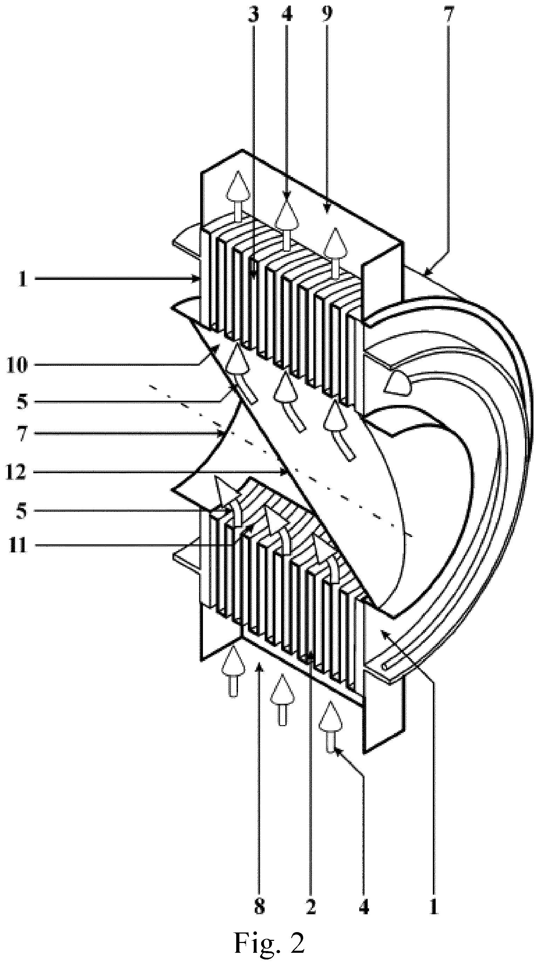

Figures 1 and 2 show a schematic view of the heat exchanger in a cross section and in a cross-section with a side view, respectively. Rotor **1** is made of ring elements, the gaps between which are sealed alternately along the inner and outer perimeter. This creates channels **2** and **3** , separating the exhaust air **4** and the supply air **5.** There are cylinders located at both ends of the rotor **1** . On the part of the housing **7** enclosing the rotor **1** from the outside, there are inlet **8** and outlet **9** openings for exhaust air **4** . The inner part of the housing **7 ,** which is a cylinder made with slots forming openings for the input **10** and output **11** of supply air **5** . Also in the cylinder **7** there is a partition **12** installed separating the input **10** and the output **11** of the supply air **5 ,** while the input and output of the supply air into the inner part of the housing is carried out through its ends.

Rotation of the rotor **1** can be carried out continuously at a speed of about one revolution per hour. Also, the rotation of the rotor **1** can be carried out with stops, with a rotation of a few degrees and with a stop for a time of no more than a minute so that the average speed of the rotor **1** is about one revolution per hour. The rotation of the rotor **1** itself can be carried out using an electric drive with reduction mechanisms using belt, chain, worm, gear and other mechanisms.

Rotor **1's** axis of rotation can be horizontal or at an angle, but it must be different from the vertical. The horizontal location of the rotor **1's** axis of rotation, as shown in Figures 1, 2, and 3, is preferable.

The cylinders that make up the heat exchanger housing **7** can additionally be covered by rotational units **6,** making it easier to rotate the rotor **1** relative to the housing **7.** As rotational units **6,** rolling rollers and other similar units can be used, capable of positioning the position of the rotor 1 relative to the housing and at the same time facilitating the rotation of the rotor **1** .

Heat exchange between the supply air **5** and the exhaust air **4** occurs through the walls separating the channels without mixing these flows. The specified arrangement of openings for the input **8 , 10** into the rotor **1** and the output **9 , 11** from the rotor **1 of** the supply air **5** and exhaust air **4** provides a generally countercurrent pattern of movement of these flows in the channels of the rotor **1** , which significantly increases the efficiency of heat exchange between these flows. In this case, in the case of negative supply air **5** temperatures and positive exhaust air **4** temperatures , the maximum surface temperature of the channels will be in the lower sector of the rotor **1** , and the minimum - in the upper sector. The slow rotation of the rotor **1**causes its sectors to gradually move from the negative temperature zone, where its surfaces freeze on the exhaust air **4** side, positive temperature zone, where frozen surfaces thaw and liquid condensate is discharged, and back. Thus, continuous defrosting of the rotor1 occurs. Too low rotor **1** speed will lead to a significant increase in the thickness of the ice that builds up in the sector with a negative temperature, which significantly worsens the heat exchange between the channels for exhaust air **4** and the supply air **5** . If the rotor **1** rotation speed is too high, incomplete thawing of the ice in the sector with a positive temperature is possible, and the contribution of the rotor's **1** heat capacity becomes significant, reducing temperature gradients between the rotor **1** walls and air flows and, as a result, reducing heat exchanger efficiency. Accordingly, there is a certain optimal rotation speed of the rotor **1,** depending on the gap in the channels, the surface area of the channels, the flow rate and humidity of the exhaust air **4** . In order of magnitude, this speed is about one revolution per hour and can vary several times in one direction or the other. Since over a period of about a minute there is no significant change in the thickness of the ice during its freezing and thawing, the rotor **1** rotation can be not only continuous, but also with stops, i.e. with a turn at a certain small angle about units of degrees, followed by a stop for less than a minute, as long as the average rotation speed is maintained. The intermittent rotation of the rotor **1,** i.e., with stops, enables the use of mechanisms with a lower reduction coefficient, which are correspondingly cheaper.

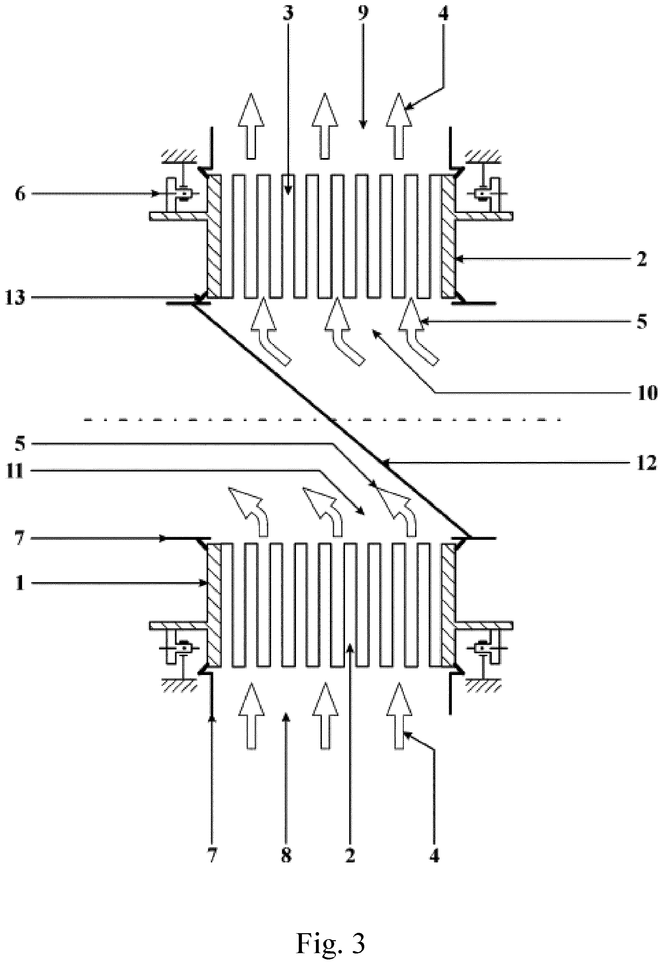

The heat exchanger can be additionally equipped with sliding sealing elements **13 ,** the placement of which is shown in Figure 3. Sliding sealing elements **13** are located between the housing **7** and the rotor **1** . The additional use of sealing elements **13** makes it possible to seal the gaps between the rotor **1** and the housing **7** so as to eliminate unwanted flows of exhaust and supply air with the environment and with each other. To seal the gaps between the rotor **1** and the housing **7** , sliding seals made of brushes, felt, rubber, etc. can be used.

The annular elements forming channels **2** and **3** of the rotor **1** can be made entirely or contain inserts made of gas-tight vapor-moisture-permeable material, allowing liquid condensate to be absorbed from the channels where it is formed and evaporated in other channels.

Liquid condensate can also be discharged by draining it under the influence of gravity. In this case, the heat exchanger housing **7** may additionally have openings for draining liquid condensate.

To reduce heat losses of the heat exchanger and, accordingly, increase its efficiency, the housing **7** and the ends of the rotor **1** can be additionally covered with thermal insulation.

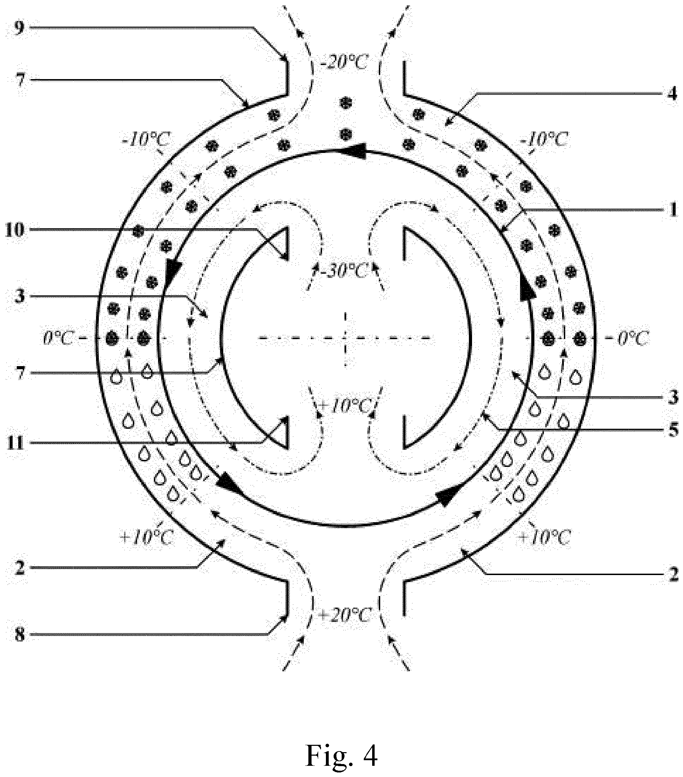

The heat exchanger operates as follows, according to the application method of the heat exchanger, the circuit diagram of which is shown in Figure 4. The situation with ventilation of a warm room (+20°C) with a humidity of about 55% (absolute moisture content 9.4 g/m ³ ) in conditions of significant negative external temperatures (-30°C) is described. The flow rates of exhaust and supply air are balanced, i.e. approximately equal.

The exhaust air **4** enters the rotor **1** through the input **8** and, moving through the channels **2** on both sides of the rotor's **1** axis of rotation to the output **9** , gives up its heat to the supply air **5** , moving towards it also on both sides of the rotor's **1** axis of rotation through other channels **3** from input **10** to output **11** . In this case, the exhaust air **4** cools down, and the supply air **5** heats up. Heat exchange between the flows **4** and **5** is carried out through the surfaces of the separating channels **2** and **3** .

As the exhaust air **4** cools to a temperature of +10°C, it reaches the dew point, and with further cooling, moisture begins to condense from it on the channels' **2** surfaces. When the exhaust air is cooled to 0°C, about 4.5 grams of liquid will condense from each cubic meter, which is almost half of its initial moisture content.

Further cooling of the exhaust air **4** causes water vapor to precipitate on the surfaces of the channels **2** in the form of ice and frost, and as the temperature drops, the moisture content decreases significantly, as does the rate of freezing of the surfaces.

Slow continuous or intermittent rotation of the rotor 1 causes the zone of intensive freezing of the channel surfaces **2** to gradually shift. On the one hand, it enters a zone of deep negative temperatures, where the freezing rate decreases significantly; on the other hand, it moves into a zone of positive temperatures, where it thaws. Thus, the maximum thickness of ice formation can be controlled by varying the rotation speed of the rotor 1and the surface area of its channels **2** in relation to the volume of exhaust air **4.** At the same time, as long as liquid condensate is discharged, the initial humidity of the exhaust air has no effect on the amount of ice. Because the moisture content of air at temperatures below -20°C (about 1 g/m ³ ) is so low, lowering the temperature does not significantly increase ice growth. As a result, the proposed device can operate at significantly lower external temperatures.

The discharge of liquid condensate from channels **2** of the exhaust air **4** is possible in different ways. For example, by gravity-driven draining through a pipe in the lower part of the heat exchanger (not shown in the figure) or by absorption on the channel **2** surface followed by evaporation in channel **3,** by the production of ring elements that either entirely or partially contain gas-dense, vapor and moisture-resistant inserts.

In this case, during operation of the rotor **1** , its operating speed can be additionally manually or automatically adjusted. This is carried out in accordance with air parameters, including indoor and outdoor air temperatures, indoor and outdoor humidity levels, and so forth. Adjusting the speed based on the air parameters enables to use the heat exchanger more efficiently under any external conditions.

The present materials of the application provide a preferred disclosure of the embodiment of the claimed technical solution that should not be used as limiting other particular embodiments that do not go beyond the claimed scope of legal protection and are evident for those skilled in the art.

## Claims

1. A heat exchanger includes a rotor placed in a housing, where the rotor is made of ring elements, the gaps between which are sealed in such a way that channels are formed separating the supply and exhaust air,
the body consists of outer and inner cylinders,
with the outer cylinder enclosing the rotor and having at least one opening in the lower part for introducing exhaust air into the rotor and at least one opening in the upper part for discharging exhaust air from the rotor,
and the inner cylinder is inserted into the rotor and contains in the upper part at least one opening for introducing supply air into the rotor and in the lower part at least one opening for discharging supply air from the rotor,
at the same time, a partition is built into the inner cylinder, separating the input and output of supply air,
wherein the supply air input and exhaust air outlet are located on one side relative to the rotor rotation axis, and the supply air outlet and exhaust air input are located on the other side relative to the rotor rotation axis.

2. The heat exchanger according to claim 1 differs in that the rotor rotation axis is horizontal.

3. The heat exchanger according to claim differs in that it includes intermediate rotational units.

4. The heat exchanger according to claim 3 differs in that the rotor is installed on intermediate rotational units.

5. The heat exchanger according to claims 1-4 differs in that there are sliding sealing elements between the housing and the rotor.

6. The heat exchanger according to claims 1-5 differs in that the walls separating the channels are made of gas-tight vapor and/or moisture-permeable material.

7. The heat exchanger according to claims 1-5, differs in that the walls separating the channels have inserts made of gas-tight vapor and/or moisture-permeable material.

8. The heat exchanger according to claims 1-7 differs in that the housing and/or ends of the rotor are covered with a heat-insulating shell.

9. The heat exchanger according to claims 1-8 differs in that the housing has openings for discharging liquid condensate.

10. A method of using a heat exchanger containing a rotating rotor, according to which:
• exhaust air is introduced into the rotor through the exhaust air inlet opening in the heat exchanger;
• supply air is introduced into the rotor through the supply air inlet opening in the heat exchanger;
• exhaust air is passed through the rotor through exhaust air channels;
• supply air is passed through the rotor through supply air channels;
• exhaust air is discharged from the rotor through the discharge exhaust air opening of the heat exchanger;
• supply air is discharged from the rotor through the discharge supply air opening of the heat exchanger;
at that, the input of supply air and the output of exhaust air are carried out on one side relative to the rotor's axis of rotation, while the output of supply air and the input of exhaust air are carried out on the opposite side of the rotor's axis of rotation.

11. The method of using a heat exchanger according to claim 10, **characterized in that** during the heat exchanger operation the rotor is rotated at a speed of about one revolution per hour.

12. The method of using a heat exchanger according to claim 11, **characterized in that** during the heat exchanger operation the rotor rotation speed is controlled depending on the temperature and humidity of the external air.

13. The method of using a heat exchanger according to claim 10, **characterized in that** during operation of the heat exchanger the rotor is rotated with stops.

14. The method of using a heat exchanger according to claim 13, **characterized in that** the rotor is rotated at an angle of the order of several degrees and stopped for a period of no more than a minute so that the average rotation speed of the rotor is about one revolution per hour.

15. The method of using a heat exchanger according to claim 10, **characterized in that** the resulting liquid condensate is discharged from the heat exchanger by gravity.

16. The method of using a heat exchanger according to claim 10, **characterized in that** the formed liquid condensate is absorbed from the rotor channels, where it is formed, and evaporated in other rotor channels.
